# EUROPÄISCHE PATENTSCHRIFT

(11) **EP 0 718 377 B1**
(45) Veröffentlichungstag und Bekanntmachung des Hinweises auf die Patenterteilung: **04.11.1998**
(21) Anmeldenummer: 95119283.0
(22) Anmeldetag: 07.12.1995
(51) Int. Cl.: C09C 1/00, C09D 5/08

(54) **Korrosionsschutzpigment und dessen Anwendung**
Corrosion inhibiting pigment and its use
Pigment inhibiteur de corrosion et son utilisation

(30) Priorität: 22.12.1994 DE 4445844; 10.11.1995 DE 19541895
(43) Veröffentlichungstag der Anmeldung: 26.06.1996
(73) Patentinhaber: Chemische Fabrik Budenheim Rudolf A. Oetker, D-55257 Budenheim (DE)
(72) Erfinder: Götzmann, Karl, D-55257 Budenheim (DE); Dorn, Karlheinz Dr., D-55257 Budenheim (DE); Nägerl, Hans-Dieter Dr., D-67373 Dudenhofen (DE); Göbelbecker, Sieghard Dr., D-55294 Bodenheim (DE)
(74) Vertreter: Weber, Dieter, Dr.

(56) Entgegenhaltungen:
- EP-A- 0 011 223
- EP-A- 0 017 784
- DE-A- 4 014 523
- CHEMICAL ABSTRACTS, vol. 111, no. 22, 27.November 1989 Columbus, Ohio, US; abstract no. 196842d, Seite 107; & CS-A-257 091 (NEDOROST ET AL.) 16.Januar 1989

## Beschreibung

Die Erfindung beschreibt ein aktives Korrosionsschutzpigment für den Oberflächenschutz von Metallen und Metallegierungen.

Es ist bekannt, Anstrichmittel, die zum Schutz von Metallen gegen die atmosphärische Korrosion verwendet werden, mit Korrosionsschutzpigmenten zu versehen. Als korrosionsinhibierende Pigmente sind bisher vor allem toxische Pigmente auf der Basis von Blei oder Schwermetallverbindungen bzw. Chromate verwendet worden.Bedingt durch den Umweltschutz ist jedoch der Einsatz solcher toxischer Pigmente stark eingeschränkt Die Aufgabe war es also, vergleichbar wirksame, nicht toxische Pigmente zu finden, die ohne Einfluß auf die Umwelt sind. Es hat dieserhalb zunächst nicht an Bemühungen gefehlt und im Verlauf dieser Bemühungen hat es sich gezeigt, daß bestimmte Phosphate durchaus vergleichbare Korrosionsschutzwirkung aufweisen.

Im Journal of Coatings Technology 58, 1986, 59-65 weisen E. Adrian und A. Bittner daraufhin, daß das toxische Zinkchromat durch Zinkphosphat ersetzt werden kann. Gute Ergebnisse werden nach diesem Bericht auch mit basischem Zink-Molydän-phosphat bzw. Zink-Aluminium-phosphat erhalten. In der DOS 28 49 712 wird ein Korrosionsschutzpigment bestehend aus einer Mischung von Dicaldiumphosphatdihydrat und Dimagnesiumphosphattrihydrat beschrieben. Die DOS 29 16 029 beansprucht die Herstellung eines solchen Pigmentes durch gemeinsame Fällung. Die DOS 29 40 695 wiederum beansprucht die Verwendung von Dicalciumphosphatdihydrat und Dimagnesiumphosphattrihydrat in Kombination mit Zinkoxid. Die DOS 2458706 beansprucht Pigmente auf der Basis von Magnesiumphosphaten u.a. auch tertiäres Magnesiumphosphat. Andererseits ist aus der Literatur (Journal of the Colour Society, Apr - Jun 1969, Seiten 9-12) bekannt, daß mit tertiärem Magnesiumphosphat keine zufriedenstellenden Ergebnisse erzielt worden sind. Letztlich werden in der DOS 4014523 Korrosionsschutzpigmente beschrieben, bei denen β-Tricalciumphosphat alleine oder in Verbindung mit tertiärem Zinkorthophosphat eingesetzt wird.

Obwohl die bisher beschriebenen Korrosionsschutzpigmente auf Phosphatbasis durchaus vergleichbare Schutzwirkungen gegenüber den bisher verwendeten toxischen Pigmenten aufweisen, war es wünschenswert, noch weiter verbesserte aktive Phosphatpigmente zu suchen, insbesondere auch solche, die mit den üblicherweise verwendeten Harzen, Bindemitteln und sonstigen Inhaltsstoffen der korrosionsschützenden Anstrichmittel problemlos verträglich sind.

Erfindungsgemäß wird diese Aufgabe mit einem Korrosionsschutzpigment mit den Merkmalen des Anspruches 1 gelöst.

Bei den Arbeiten wurde überraschenderweise gefunden, daß die sehr gute Korrosionsschutzwirkung von β-Tricalciumpohosphat bzw. von Mischungen aus β-Tricalciumphosphat mit tertiärem Zinkorthophosphat noch weiter verbessert werden kann, wenn das β-Tricalciumphosphat in Kombination mit dem an sich nicht besonders wirksamen tertiären Magnesiumphosphat oder mit Dicalciumphosphatdihydrat eingesetzt wird. Dabei erhält man korrosionsinhibierende Pigmente, die bessere Korrosionsschutzeigenschaften besitzen als solche, die nur β-Tricalciumphosphat, β-Tricalciumphosphat und tertiäres Zinorthophosphat, bzw. tertiäres Magnesiumphosphat bzw. Dicalciumphosphat-dihydrat enthalten. Diese unerwartete und für den Fachmann nicht vorhersehbare, synergistische Wirkung der genannten Kombinationen von β-Tricalciumphosphat erstreckt sich über einen überraschend großen Mischungsbereich. Der entscheidende Unterschied im Schutzverhalten solcher Mischungen aus β-Tricalciumphosphat und tertiärem Magnesiumphosphat bzw. Dicalciumphosphat-dihydrat gegenüber den einzelnen Komponenten und dem Stand der Technik genannten Phosphatpigmenten ist darin zu sehen, daß die pH-Werte von wässrigen Aufschlämmungen der erfindungsgemäßen Korrosionsschutzpigmente im pH-Bereich >7 sind und damit in einem Bereich liegen, in dem die atmosphärische Korrosion von Eisen infolge der sogenannten Passivierung unterbleibt. Die Korrosionsschutzwirkung der erfindungsgemäßen Pigmente wird noch dadurch verstärkt, daß infolge Hydrolyse und Reaktion mit der Atmosphäre PO₄-Ionen bzw. HPO₄-Ionen freigesetzt werden, die dann sofort mit der ungeschützten Metalloberfläche in Reaktion treten und eine Schutzschicht aus basischem Eisenphosphat bilden. Bei diesem Reaktionsmechanismus ist eine Wechselwirkung zwischen den Einzelkomponenten unverkennbar. Dies zeigt sich deutlich bei einem Vergleich der elektrischen Leitfähigkeiten und pH-Wert von wässrigen Aufschlämmungen der Einzelkomponenten und der erfindungsgemäßen Mischungen. In jeweils 5%igen wässrigen Aufschlämmungen wurden folgende Leitfähigkeiten in µS/cm und pH-Werten gemessen:

| | | Leitfähigkeit | pH-Wert |
|---|---|---|---|
| tert. Mg₃(PO₄)₂.4H₂O | | 149 | 9,63 |
| β-Ca₃(PO₄)₂/Mg₃(PO₄)₂.4H₂O | 75:25 | 178 | 9,17 |
| β-Ca₃(PO₄)₂/Mg₃(PO₄)₂.4H₂O | 50:50 | 156 | 9,44 |
| β-Ca₃(PO₄)₂/Mg₃(PO₄)₂.4H₂O | 25:75 | 134 | 9,48 |
| | | | |
| β-Ca₃(PO₄)₂ | | 51 | 8,45 |
| Ca₂H₂(PO₄)₂.2H₂O | | 703 | 7,20 |
| β-Ca₃(PO₄)₂/CaH(PO₄).2H₂O | 1:3 | 594 | 7,25 |
| β-Ca₃(PO₄)₂/CaH(PO₄).2H₂O | 1:1 | 473 | 7,35 |
| β-Ca₃(PO₄)₂/CaH(PO₄).2H₂O | 3:1 | 307 | 7,40 |

Darüberhinaus werden in einem Anstrichmittel, das solche erfindungsgemäßen Pigmente enthält, chemische Reaktionen mit den Harzen und Bindemitteln eintreten, die eine zusätzliche Schutzwirkung zumindest begünstigen. Nach J. Ruf "Korrosions Schutz durch Lacke und Pigmente", Seite 64, ist eine chemische Wirkung vornehmlich bei basischen Pigmenten gegeben. Die vorhandenen oder sich bildenden Metalloxide oder Hydroxide bilden mit den Fettsäuren der Bindemittel Metallseifen. Diese können die physikalische Beschaffenheit einer Lackschicht verbessern. Weiter bewirken Oxide eine Neutralisation aggressiver Stoffe, indem sie mit den Abbauprodukten des Bindemittels reagieren oder sich mit korrosionsaktiven Elektrolyten des Mediums umsetzen. Außerdem sind noch chemiesorptive, physikalische und mechanische Eigenschaften der Korrosionsschutzpigmente von Bedeutung, die sich auf Flexibilität, Haftfestigkeit sowie auf das Abriebverhalten einer Lackschicht auswirken. Besonders günstig werden die erfindungsgemäßen Korrosionsschutzpigmente in Farbformulierungen auf Wasserbasis bzw. wasserverdünnbaren Farben verwendet. In solchen wasserhaltigen Formulierungen ist es von besonderer Wichtigkeit, daß die Pigmente selbst als auch deren Hydrolyse- oder Abbauprodukte nicht mit anderen Inhaltsstoffen der Farbe reagieren. Darüberhinaus hat es sich gezeigt, daß die Korrosionsschutzwirkung sich nicht auf Eisen bzw. Eisenlegierungen beschränkt, sondern auch Aluminium- und Aluminiumlegierungen hervorragend geschützt werden.

Die Erfindung betrifft bevorzugt somit ein aktives korrosionsinhibierendes Pigment, welches dadurch gekennzeichnet ist, daß es aus einer Mischung von β-Tricalciumphosphat und tertiärem Magnesiumphosphat besteht, wobei das Gemisch 25 - 75 Gew.% β-Tricalciumphosphat und 75 - 25 Gew% tertiäres Magnesiumphosphat enthält. Besonders bevorzugt sind dabei Mischungen, die etwa 50 Gew.% β-Tricalciumphosphat und etwa 50 Gew.% tertiäres Magnesiumphosphat oder etwa 35 Gew.% β-Tricalciumphosphat und etwa 65 Gew.% Dicalciumphosphat-dihydrat enthalten. Die erfindungsgemäßen Mischungen bestehen aus ungiftigen, umweltunbedenklichen Substanzen, die besonders vorteilhaft in korrosionsschützenden Anstrich- bzw. Beschichtungssystemen - eingesetzt werden können. Beide Einzelprodukte sind problemlos herzustellen, sie sind mit den üblichen Bindemitteln gut verträglich und lassen sich ohne Schwierigkeiten verarbeiten. Das erfindungsgemäße Korrosionsschutzpigment liegt zweckmäßig mit einer Teilchengröße von <5µm vor. Die Kornverteilung ermöglicht eine optimale Packungsdichte in einer damit hergestellten Beschichtung und erlaubt hohe Pigmentvolumenkonzentrationen.

Anhand von Beispielen wird zur Dokumentation der ausgezeichneten Korrosionsschutzwirkung der erfindungsgemäßen Korrosionsschutzpigmentes gegenüber anderen Pigmenten wurde der allseits anerkannte Test nach M.F.Clay herangezogen. Bei diesem Test werden blanke Stahlbleche gereinigt, entfettet, gewogen und in wässrige Aufschlämmungen des jeweiligen Pigmentes eingebracht. Die Beurteilung erfolgt nach einer Einwirkungszeit von 30 Tagen, des jeweiligen Pigmentes auf die Probe. Nach dem Ende der Testzeit werden die Probebleche abgespült, gesäubert, getrocknet und die Gewichtsveränderung bestimmt.

Nachfolgende Tabelle enthält die Gewichtsveränderungen von Proben, die diversen Wasser/Pigment-Aufschlämmungen ausgesetzt waren.

### Prüfung von Korrosionsschutzpigmenten nach der Methode von M.F. Clay

| | | Masseverlust in % nach 30 Tagen |
|---|---|---|
| Talkum | (inertes, passives, blättchenförmiges Korrosionsschutzpigment) | = 0,36 |
| | | |
| Vergleichsbeispiel 4 | tertiäres Zinkphosphat (nach G.Adrian und A.Bittner) | = 0,22 |
| | | |
| Vergleichsbeispiel 5 | sek.Calciumphosphatdihydrat/sek.Magnesiumphosphattrihydrat 1:1 nach DOS 2849712 bzw. DOS 29 16 029 | = 0,324 |
| | | |
| Vergleichsbeispiel 6 | sek.Calciumphosphatdihydrat/sek.Magnesiumphosphattrihydrat/Zinkoxyd 1:1:0,1 nach DOS 29 40 695 | = 0,210 |
| | | |
| Vergleichsbeispiel 7 | tert. Magnesiumphosphat nach DOS 2458706 | = 0,310 |
| | | |
| Vergleichsbeispiel 8 | β-Tricalciumphosphat nach DOS 4014523 | = 0,166 |
| | | |
| Vergleichsbeispiel 9 | β-Tricalciumphosphat/tert.Zinkphosphat nach DOS 4014523 | = 0,205 |
| | | |

| Erfindungsgemäßes Pigment aus β-Tricalciumphosphat/tert. Magnesiumphosphat | | |
|---|---|---|
| | | |
| Beispiel 1 | 75 Gew.% β-Tricalciumphosphat/25 Gew.% tert.Magnesiumphosphat | = 0,105 |
| | | |
| Beispiel 2 | 50 Gew.% β-Tricalciumphosphat/50 Gew.% tert. Magnesiumphosphat | = 0,127 |
| | | |
| Beispiel 3 | 25 Gew.% β-Tricalciumphosphat/75 Gew.% tert. Magnesiumphosphat | = 0,088 |

Die vorstehende Tabelle zeigt die deutlich bessere Schutzwirkung des erfindungsgemäßen Korrosionsschutzpigmentes gegenüber anderen bereits bekannten Korrosionsschutzpigmenten auf Phosphatbasis.

Die nachfolgenden Anwendungsbeispiele zeigen die besondere Schutzwirkung des erfindungsgemäßen Korrosionsschutzpigmentes gegenüber dem Stand der Technik.

### Beispiel 1-3:

In einem Labormischer wurden 400 ml dest. Wasser vorgelegt und bei laufendem Mischwerk wurden nach und nach 600 g des jeweiligen Korrosionsschutzpigmentes eingearbeitet. Es entsteht eine Pigment/Wasser-Suspension mit einem Feststoffgehalt von 60 Gew.%.

Für den Korrosionstest wurden sandgestrahlte Bleche aus St 37/2 mit den Abmessungen 150x150x1mm folgendermaßen vorbereitet: Auf die Blechoberfläche wurden Weichgummiringe, äußerer Durchmesser 95 mm, innerer Durchmesser 50 mm, Dicke 2 mm mittig aufgeklebt. Die freie Fläche innerhalb des Gummiringes wurde mit der im Labormischer hergestellten, jeweiligen Pigmentpaste ausgefüllt und glattgestrichen.

Die so vorbereiteten Probebleche wurden im Kesternich-Prüfgerät einer gesättigten Wasserdampfatmosphäre bei 35°C ausgesetzt. Nach einem Einwirkungszeitraum von 30 Tagen wurden die Bleche aus dem Testgerät entnommen, die Pigmentsuspension ohne mechanische Hilfe von der Testfläche abgespült, die Bleche anschließend bei 100°C getrocknet. Die Auswertung erfolgte durch Fotografie der Bleche mit der geschützten und ungeschützten Fläche und darüberhinaus durch visuelle Beurteilung.
- Beispiel 1:: 60 Gew.%ige Suspension aus dem erfindungsgemäßen Pigment enthaltend 75 Gew.% β-Tricalciumphosphat und 25 Gew.% tertiäres Magnesiumphosphat.
- Visuelle Beurteilung:: Gesamtfläche mit homogener, feinkörniger Schutzschicht bedeckt, die stellenweise schwach rostbraun gefärbt ist.
- Beispiel 2:: 60 Gew.%ige Suspension aus dem erfindungsgemäßen Pigment enthaltend 50 Gew.% β-Tricalciumphosphat und 50 Gew.% tertiäres Magnesiumphosphat.
- Visuelle Beurteilung:: Gesamtfläche mit homogener, feinkörniger Schutzschicht bedeckt, die stellenweise schwach rostbraun gefärbt ist.
- Beispiel 3:: 60 Gew.%ige Suspension aus dem erfindungsgemäßen Pigment enthaltend 25 Gew.% β-Tricalciumphosphat und 75 Gew.% tertiäres Magnesiumphosphat
- Visuelle Beurteilung:: Gesamtfläche mit homogener, feinkörniger Schutzschicht bedeckt, die stellenweise schwach rostbraun gefärbt ist.

### Beispiele 4 - 9:

In einem Labormischer wurden 400 ml dest. Wasser vorgelegt und bei laufendem Mischwerk wurden nach und nach 600 g des jeweiligen Korrosionsschutzpigmentes eingearbeitet. Es entsteht eine Wasser/Pigment-Suspension mit einem Feststoffgehalt von 60 Gew.%. Für den Korrosionstest wurden auch hier sandgestrahlte Bleche aus St 37/2 mit dem Abmessungen 150x150x1mm folgendermaßen vorbereitet: Auf die Blechoberfläche wurden Weichgummiringe, äußerer Durchmesser 95mm, innerer Durchmesser 50mm, Dicke 2mm, mittig aufgeklebt. Die Fläche innerhalb des Gummiringes (Testfläche) wurde mit der im Labormischer hergestellten, jeweiligen Pigmentpaste ausgefüllt und glattgestrichen. Die so vorbereiteten Probebleche wurden im Kesternich-Prüfgerät einer gesättigten Wasserdampfatmosphäre bei 35°C ausgesetzt. Nach einem Einwirkungszeitraum vom 30 Tagen wurden die Bleche aus dem Testgerät entnommen, die Pigmentsuspension ohne mechanische Hilfe von der Testfläche abgespült, die Bleche anschließend bei 100°C getrocknet. Die Auswertung erfolgte durch Fotografie der Bleche mit der geschützten und ungeschützen Fläche und darüberhinaus durch visuelle Beurteilung.
- Beispiel 4:: 60 Gew.%ige Suspension von tertiärem Zinkphosphat nach G. Adrian und A. Bittner
- Visuelle Beurteilung:: Die gesamte Testfläche ist mit feinkörnigem Rost bedeckt. Am Rande ist eine dünne, von Rost durchsetzte Schicht zu erkennen.
- Beispiel 5:: 60 Gew.%ige Suspension enthaltend 50 Gew.% sekundäres Calciumphosphatdihydrat und 50 Gew.% sekundäres Magnesiumphosphattrihydrat nach DOS 28 49 712 bzw. 29 16 029.
- Visuelle Beurteilung:: Etwa die Hälfte der Testfläche ist stark korrodiert, die restliche Fläche ist mit einer Schutzschicht bedeckt, die jedoch von Rost durchsetzt ist.
- Beispiel 6:: 60 Gew.%ige Suspension aus sekundärem Calciumphosphatdihydrat, sekundärem Magnesiumphosphattrihydrat, Zinkoxid im Mischungsverhältnis 1:1:0,1 nach DOS 29 40 695
- Visuelle Beurteilung:: Flächige Korrosion mit teilweise Rostkrusten auf einem Teil der Testfläche. Auf einem Teil der Fläche ist eine von Rost durchsetzte Schutzschicht erkennbar. Einige kleine Stellen ohne Rost und ohne Schutzschicht.
- Beispiel 7:: 60 Gew.%ige Suspension aus tertiärem Magnesiumphosphat nach DOS 2458706.
- Visuelle Beurteilung:: Die gesamte Testfläche ist mit einer Schutzschicht bedeckt, die teilweise (ca. 50 % der Fläche) mit leichten Rost durchsetzt ist.
- Beispiel 8:: 60 Gew.%ige Suspension aus β-Tricalciumphosphat nach DOS 40 14 523.
- Visuelle Beurteilung:: Die Testfläche ist fast auf der gesamten Fläche mit Rost bedeckt. Teilweise dicke Rostkrusten mit eingeschlossenem Pigment zu erkennen.
- Beispiel 9:: 60 Gew.%ige Suspension aus β-Tricalciumphosphat und tertiärem Zinkphosphat im Mischungsverhältnis 3:1 nach DOS 40 14 523.
- Visuelle Beurteilung:: Die gesamte Testfläche ist mit einer von feinem Rost durchsetzten Schutzschicht bedeckt.

## Patentansprüche

1. Korrosionsschutzpigment zum Oberflächenschutz von Metallen bzw. Metallegierungen mit Phosphaten, **dadurch gekennzeichnet,** daß das Korrosionsschutzpigment eine Mischung von β-Tricalciumphosphat mit tertiärem Magnesiumphosphat oder mit Dicalciumphosphatdihydrat ist.

2. Korrosionsschutzpigment nach Anspruch 1, dadurch gekennzeichnet, daß es aus 25-75 Gew.% β-Tricalciumphosphat und 75-25 Gew.% tertiärem Magnesiumphosphat oder Dicalciumphosphat-dihydrat besteht.

3. Korrosionsschutzpigment nach Anspruch 2, dadurch gekennzeichnet, daß es aus etwa 50 Gew.% β-Tricalciumphosphat und etwa 50 Gew.% tertiärem Magnesiumphosphat oder aus etwa 35 Gew.% β-Tricalciumphosphat und etwa 65 Gew.% Dicalciumphosphat-dihydrat besteht.

4. Korrosionsschutzpigment nach einem der Ansprüche 1 und 2, dadurch gekennzeichnet, daß es eine Korngröße von < 5µm besitzt.

5. Verwendung eines Korrosionsschutzpigmentes nach einem der Ansprüche 1 - 4 in Mischung mit Farbstoffen und sonstigen Lackzusatzstoffen, insbesondere in wässrigen Formulierungen.

## Claims

1. An anti-corrosion pigment for the surface protection of metals or metal alloys with phosphates characterised in that the anti-corrosion pigment is a mixture of β-tricalcium phosphate with tertiary magnesium phosphate or with dicalcium phosphate dihydrate.

2. An anti-corrosion pigment according to claim 1 characterised in that it comprises 25 - 75% by weight of β-tricalcium phosphate and 75 - 25% by weight of tertiary magnesium phosphate or dicalcium phosphate dihydrate.

3. An anti-corrosion pigment according to claim 2 characterised in that it comprises about 50% by weight of β-tricalcium phosphate and about 50% by weight of tertiary magnesium phosphate or about 35% by weight of β-tricalcium phosphate and about 65% by weight of dicalcium phosphate dihydrate.

4. An anti-corrosion pigment according to one of claims 1 and 2 characterised in that it is of a grain size of < 5 µm.

5. Use of an anti-corrosion pigment according to one of claims 1 to 4 mixed with colouring agents and other paint additives, in particular in aqueous formulations.

## Revendications

1. Pigment anticorrosif pour la protection superficielle de métaux ou d'alliages métalliques par des phosphates, caractérisé en ce que le pigment anticorrosif est un mélange de phosphate tricalcique β et de phosphate de magnésium tertiaire ou de phosphate dicalcique dihydraté.

2. Pigment anticorrosif selon la revendication 1, caractérisé en ce qu'il est constitué de 25 à 75 % en poids de phosphate tricalcique β et de 75 à 25 % en poids de phosphate de magnésium tertiaire ou de phosphate dicalcique dihydraté.

3. Pigment anticorrosif selon la revendication 2, caractérisé en ce qu'il est constitué d'environ 50 % en poids de phosphate tricalcique β et d'environ 50 % en poids de phosphate de magnésium tertiaire, ou d'environ 35 % en poids de phosphate tricalcique β et d'environ 65 % en poids de phosphate dicalcique dihydraté.

4. Pigment anticorrosif selon l'une des revendications 1 et 2, caractérisé en ce qu'il a une granulométrie < 5 µm.

5. Utilisation d'un pigment anticorrosif selon l'une des revendications 1 à 4 en mélange avec des colorants et d'autres additifs pour peintures et vernis, en particulier dans des formulations aqueuses.
